# EUROPEAN PATENT APPLICATION

(11) **EP 1 629 730 A1**
(43) Date of publication of application: **01.03.2006**
(21) Application number: 04447297.5
(22) Date of filing: 24.12.2004
(51) Int. Cl.: A23L 1/308, A23L 1/0528, A23L 1/09, A23L 1/236, A21D 13/08, A23L 1/06, A23L 1/314, A23L 1/318

(54) **Functional sugar replacement**

(30) Priority: 12.08.2004 EP 04103889
(71) Applicant: First-to-Market N.V., 2610 Wilrijk (BE)
(72) Inventor: De Baets, Sophie, 9980 Sint-Laureins (BE)
(74) Representative: HOFFMANN EITLE

(57) **Abstract**

The present invention is related to a functional food ingredient, which replaces sugar on a 1/1 weight and/or volume basis in food recipes containing sucrose, with a substantial caloric reduction in view. More than an ingredient, it has to be seen as a functional ingredient, since it possesses some health promoting effects. The functional food replacement for sucrose according to the present invention comprises prebiotic fibres and sweeteners, and possibly other non selective fibres, minerals, vitamins and probiotic strains.

## Description

The present invention is related to a replacement composition for sugar, having both the sweetening and structuring characteristics of sugar. More particularly, the present invention involves a solid or semi-solid functional sweetener that can be used to replace sugar in any preparation on a 1/1 weight basis and/or additionally on a 1/1 volume basis.

Sugar is a popular sweetening additive in human food preparation. By sugar is understood sucrose but also other commonly used calorie rich sweetening additives such as glucose, fructose and high fructose corn syrups. Popular feeding habits tend to show an over consumption of sugar. However, among other due to its high calorie content, high uptake of sugar is not recommended for dietary reasons. The most common adverse health effects of sugar are tooth decay and obesity. The rapid introduction in the 1970s of high-fructose corn syrup into the food supply, particularly in soft drinks, has been recognized as an important factor contributing to the obesity epidemic that has swept the world in the last 30 years. Further, people with diabetes need to control the intake of sugar. A high level of glucose in the blood is harmful. Even though the symptoms are not immediately severe, over time, uncontrolled high blood sugar levels can damage the smaller blood vessels, leading to complications including irreversible damage to the eyes and kidneys. Nerves can also be damaged, which can affect internal organs as well as the ability to feel sensations and pain. Uncontrolled diabetes increases the risk of cardiovascular diseases such as heart attack and stroke. Therefore, sugar replacement solutions for popular foodstuffs are of high value.

The present invention relates to a new concept with respect to healthy nutritional habits and functional foods. The basic, and most important, idea for this concept is that people no longer need to change their food habits in order to improve their health. Within the concept of the invention, it is possible to consume foods with positive health effects as simple and effective as possible, without giving up anything the consumer likes such as sweet or salty taste, palatable structure and texture of the food products. The main goal is to replace those food ingredients that are used in the largest quantities, but at the same time present an insidious poison to - even healthy - human beings. One of the most important ingredients in this context is sugar.

In this view, it is important to acknowledge the presence of complex microflora in the gastrointestinal tract (GI tract), more specifically the colon, as being part of healthy human beings. In the gastrointestinal tract, microorganisms are prevalent in the colon, where they constitute about 10¹¹-10¹²/gram of colon contents. It is known that microbes in the large intestine complete the digestion process on food components that were not digested in the small intestine, such as fibres which are oligo- and polysaccharides and are in most cases plant-derived food material.

The characteristics of these oligo- and polysaccharides are dependent on, for instance, the saccharide composition, the bonds between the saccharides and the degree of polymerisation (DP). The degree of polymerisation corresponds to the number of saccharide units (e.g. fructose and glucose) linked to each other in the carbohydrate chain of one oligo- or polysaccharide molecule. Polysaccharides can be defined as branched or unbranched chains of saccharide units having a DP of at least 10. Oligosaccharides can be defined as branched or unbranched chains of monosaccharide units having a DP between 2 and 10. Further, the average degree of polymerisation can be defined as the total number of monosaccharide units divided by the total number of saccharide molecules present in a given oligo- or polysaccharide composition. It is advantageously measured using high performance anion exchange chromatography (HPAEC) with pulsed amperometric detection (PAD) as described by Blecker C. et al., Characterisation of different inulin samples by DSC, Journal of Thermal Analysis and Calorimetry 71 (1): 215-224, 2003. Furthermore the degree of polymerisation may also be determined by one of the following analytical methods: Campa C. et al., Determination of average degree of polymerisation and distribution of oligosaccharides in a partially acid-hydrolysed homopolysaccharide: a comparison of four experimental methods applied to mannuronan, Journal of Chromatography A. 2004 Feb 13;1026(1-2):271-81; and Ravenscroft N. et al., Physicochemical characterisation of the oligosaccharide component of vaccines, Developmental Biology 2000;103:35-47.

Some of these fibres have prebiotic properties and are called prebiotic fibres or prebiotic oligo- or polysaccharides. They are mainly soluble oligo- and polysaccharides that are non digestible, which means that they are neither digested by human enzymes of the GI tract nor absorbed in the upper digestive tract. Thus they arrive unchanged in the colon where they are at least partially fermented, mainly by beneficial bacteria present in the colon, such as *Bifidobacteria* and *Lactobacilli.* Hence, these beneficial bacteria utilise prebiotic fibres as selective energy source for growth and proliferation in the colon.

This effect is called prebiotic activity, referring to stimulation and/or activation of health promoting bacteria in the intestinal tract. Studies on humans have, for instance, confirmed that ingestion of moderate amounts of these prebiotic fibres (from 5 g per day) results in a significant increase (up to 10 fold) of *Bifidobacteria* in the colon. During fermentation, these fibres are degraded and short chain fatty acids (SCFA) are produced, lowering pH levels and providing an energy source for growth and maintenance of large intestine cells. This process leads to differentiation of cancer cells, a vital step that is required before cancer cells can be killed. The pH lowering effect of the acid production results in an improved calcium and magnesium uptake, and simultaneously creates a harmful environment for pathogenic and putrefactive bacteria, such as *Clostridia, E. coli* or *Bacteroides.*

In relation to the complex microflora, probiotics were defined by a group of experts convened by the Food and Agriculture Organisation of the United Nations (FAO). Their definition of probiotics is "live microorganisms administered in adequate amounts which confer a beneficial effect on the host". In practise mainly certain *Bifidobacteria* and *Lactobacilli* are cited as having probiotic activity. They are generally referred to as probiotics when administered orally. These bacteria are capable of colonising the intestinal tract, more specifically the colon, where they exert beneficial effects on human health. However, only a few strains belonging to these two genera cause positive health effects, which are claimed in commercial applications.

Beside the effect of colonizing the colon and thereby preventing the proliferation of undesired and harmful bacteria, other health effects of probiotics and possibly also some endogenous beneficial bacteria are: decreasing the incidence or duration of diarrhoea, coping with lactose intolerance, anti-hypertensive effects, decrease in cancer risk, immune system stimulation, etc. These effects may be direct or indirect, meaning that they can be caused by either bacterial activities or products, or by products created by digestion in the digestive tract.

Replacement of sugar by intense sweeteners is a serious problem in solid and semi-solid comestibles, because sucrose fulfils both a structural and sweetening function in these products. Preparation of low sugar or no sugar added products automatically faces the problem of replacing the bulk material in the product, which, in addition, should have at least the same functionality as the replaced sugar.

Several products have already been disclosed in the prior art. However, none of these products allows replacing sugar in semi-solid or solid preparations on a 1/1 weight basis, while retaining all the palatability, taste, sweetening, functional and texturing properties of sugar. In this respect, EP 0 963 379 and US 6,423,358 disclose examples of fibre containing sugar substitutes on a 1/1 volume basis.

Moreover, said replacement should provide essentially the same sweetness as sugar, at least the same functional effects as sugar on structure, texture, appearance and palatability of the food preparation, but should also have some additional functionality such as health promoting effects and/or increased shelf life of the processed food products. Accordingly, the sugar substitute should not only replace sugar but should additionally offer a wide range of health effects while providing the human body with the required amounts of fibres, vitamins and minerals. Summarising, it can be stated that by using the sugar substitute, a better health should be obtained without making any concessions on neither taste nor structure.

The present invention aims to provide a healthy replacement for sucrose in common preparations, on a 1/1 weight basis, and preferably also on a 1/1 volume basis. This means that in any recipe requiring the presence of sugar, the amount of sugar can be replaced by the same amount of solid or semi-solid, low calorie, fibre containing sugar replacement composition according to the present invention.

To this end, the present invention provides a sugar replacement composition that comprises a bulking fibre composition, which is a combination of polysaccharides having a DP of at least 10 and oligosaccharides having a DP ranging from about 2 to about 10, and a sweetener or sweetener composition.

The bulking fibre composition comprises 30 to 75, preferably 45 to 65, weight % of polysaccharide, 5 to 45, preferably 10 to 30, weight % of oligosaccharide, the total of the sugar replacement composition being 100 weight %.

Preferably, at least one polysaccharide and/or oligosaccharide compound is prebiotic.

Further it is preferred that at least one polysaccharide and/or oligosaccharide is composed of mainly glucose units and at least one polysaccharide and/or oligosaccharide is composed of mainly fructose units.

Further it is also preferred that, the average degree of polymerisation of the oligosaccharide fraction of the bulking fibre composition is 3 to 8, preferably 3 to 5, while the average degree of polymerisation of the polysaccharide fraction of the bulking fibre composition is 10 to 20, preferably 10 to 15. Preferably, each fraction is characterized by a monomodal distribution of the DP, wherein the maximum peak is within the respective range as specified above. However, if both oligosaccharide resistant maltodextrin and polysaccharide resistant maltodextrin are used, it is also preferable to employ a single resistant maltodextrin fraction exhibiting a monomodal distribution of the DP. In this case, the maximum peak of the distribution of the DP need not necessarily be within the above-specified ranges, provided that the average DP of the oligosaccharide sub-fraction thereof and of the polysaccharide sub-fraction thereof are within the respective ranges.

The sweetener composition comprises one or several high intensity sweeteners in an amount sufficient to provide to the sugar replacement composition a sweetness about equal to the sweetness of sugar. Sweetness is determined by preparing different dilutions in water and then determining the highest dilution in which a sweet taste is perceptible. The concentration of sweetener that delivers a sweet taste equal to sugar is determined by preparing different dilutions in water, which are then compared with sugar.

Advantageously, said polysaccharide has a degree of polymerisation (DP) between 10 and 60, preferably between 10 and 40, and specifically between 10 and 20 and said oligosaccharide has a DP between 2 and 10, preferably between 2 and 8.

Throughout the present application, the term "about" is intended to permit a variation of no more than ± 10 % of the given numerical value, and preferably of no more than ± 5 % of the given numerical value.

Said polysaccharide is preferably prebiotic and is preferably selected from the group consisting of inulin, polydextrose, polysaccharide resistant maltodextrin or can be a combination thereof.

Said oligosaccharide is preferably prebiotic and is preferably selected from the group consisting of oligofructose, oligosaccharide resistant maltodextrin or can be a combination thereof.

Said high intensity sweetener is preferably selected from the group consisting of acesulfame K, neohesperidine DC, aspartame, neotame, saccharin, sucralose or can be a combination thereof. A flavour enhancer such as glucono-δ-lacton can be added to the sweetener composition.

In a particular embodiment, represented in table 1, said polysaccharide comprises 30 to 60 weight %, preferably 40 to 55 weight %, of polydextrose, 0 to 25 weight %, preferably 5 to 15 weight %, of inulin, and 0 to 20 weight %, preferably 5 to 15 weight %, of polysaccharide resistant maltodextrin, and said oligosaccharide comprises 3 to 30 weight %, preferably 5 to 10 weight %, of oligofructose and 0 to 20 weight %, preferably 5 to 15 weight %, of oligosaccharide resistant maltodextrin, the total of the sugar replacement composition being 100 weight %.

**Table 1. Sugar replacement composition, according to a particular embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Polysaccharide resistant maltodextrin | 0 to 5 | 15 to 20 |
| Oligosaccharide resistant maltodextrin | 0 to 5 | 15 to 20 |
| High intensity sweetener | * | * |

| | | |
|---|---|---|
| (*) amount sufficient to provide to the sugar replacement composition a sweetness about equal to the sweetness of sugar. | | |

According to an advantageous embodiment of the invention, represented in table 2, said sweetener composition further comprises 10 to 40 weight %, preferably 10 to 30 weight %, of low intensity sweetener, the total of the sugar replacement composition being 100 weight %.

Said low intensity sweetener is preferably selected from the group consisting of maltitol, isomalt, lactitol, erythritol, mannitol, xylitol, sorbitol, polyols, or can be a combination thereof.

**Table 2. Sugar replacement composition, according to an advantageous embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Polysaccharide resistant maltodextrin | 0 to 5 | 15 to 20 |
| Oligosaccharide resistant maltodextrin | 0 to 5 | 15 to 20 |
| Low intensity sweetener | 10 | 30-40 |
| High intensity sweetener | * | * |

| | | |
|---|---|---|
| (*) amount sufficient to provide to the sugar replacement composition a sweetness about equal to the sweetness of sugar. | | |

According to another advantageous embodiment of the invention, represented in table 3, said bulking fibre composition further comprises 0,01 to 10, preferably 0,05 to 3, weight % of insoluble, non selective, non digestible polysaccharide, the total of the sugar replacement composition being 100 weight %.

Said insoluble, non selective, non digestible polysaccharide is preferably selected from the group consisting of cellulose, hemicellulose, cereal fibres, wheat fibres, oat fibres, apple fibres, orange fibres, tomato fibres or can be a combination thereof.

According to a further advantageous embodiment of the invention, represented in table 4, said bulking fibre composition further comprises 0,01 to 10, preferably 0,05 to 3, weight % of soluble, non selective, non digestible polysaccharide, the total of the sugar replacement composition being 100 weight %.

Said soluble, non selective, non digestible polysaccharide is preferably selected from the group consisting of guar gum, arabic gum, carboxymethylcellulose, pectin, xanthan, tara, carrageenan, tragacanth, locust bean gum, agar or can be a combination thereof.

According to a specific embodiment of the invention, represented in table 5, said bulking fibre composition comprises 45 to 55 weight %, preferably about 50 weight %, of polydextrose and about 20 weight % of oligofructose, and said sweetener composition comprises about 30 weight % of maltitol, about 0,15 weight % acesulfame K and about 0,015 weight % neohesperidine DC, the total of the sugar replacement composition being 100 weight %.

**Table 3. Sugar replacement composition, according to another advantageous embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Polysaccharide resistant maltodextrin | 0 to 5 | 15 to 20 |
| Oligosaccharide resistant maltodextrin | 0 to 5 | 15 to 20 |
| Insoluble, non selective, non digestible oligosaccharide | 0 to 0,05 | 3 to 10 |
| Low intensity sweetener | 10 | 30 to 40 |
| High intensity sweetener | * | * |

| | | |
|---|---|---|
| (*) amount sufficient to provide to the sugar replacement composition a sweetness about equal to the sweetness of sugar. | | |

**Table 4. Sugar replacement composition, according to a further advantageous embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to5 | 10 to 30 |
| Polysaccharide resistant maltodextrin | 0 to 5 | 15 to 20 |
| Oligosaccharide resistant maltodextrin | 0 to 5 | 15 to 20 |
| Soluble, non selective, non digestible oligosaccharide | 0 to 0,05 | 3 to 10 |
| Insoluble, non selective, non digestible oligosaccharide | 0 to 0,05 | 3 to 10 |
| Low intensity sweetener | 10 | 30 to 40 |
| High intensity sweetener | * | * |

| | | |
|---|---|---|
| (*) amount sufficient to provide to the sugar replacement composition a sweetness about equal to the sweetness of sugar. | | |

According to a preferred embodiment of the invention, represented in table 6, said bulking fibre composition comprises 30 to 60 weight %, preferably 40 to 55 weight %, of polydextrose, up to 25 weight %, preferably 5 to 15 weight %, of inulin, 3 to 30 weight %, preferably 5 to 10 weight %, of oligofructose, up to 20 weight %, preferably 10 to 15 weight %, of resistant maltodextrin, including polysaccharide and oligosaccharide resistant maltodextrin, the total of the sugar replacement composition being 100 weight %.

**Table 5. Sugar replacement composition, according to a specific embodiment of the invention.**

| Ingredient | Preferred relative amount (Weight %) |
|---|---|
| Polysaccharide, polydextrose | 50 |
| Oligosaccharide, oligofructose | 20 |
| Low intensity sweetener, Maltitol | 30 |
| High intensity sweetener, Acesulfame K | 0,15 |
| High intensity sweetener, Neohesperidine DC | 0,015 |

**Table 6. Sugar replacement composition, according to a preferred embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Resistant maltodextrin | 0 to 10 | 15 to 20 |
| High intensity sweetener | * | * |

| | | |
|---|---|---|
| (*) amount sufficient to provide to the sugar replacement composition a sweetness about equal to the sweetness of sugar. | | |

According to a preferred specific embodiment of the invention, represented in table 7, said bulking fibre composition comprises 45 to 55 weight %, preferably about 50 weight %, of polydextrose, up to 25 weight %, preferably about 7 weight % of inulin, 5 to 30 weight %, preferably about 8 weight % of oligofructose, up to 20 weight %, preferably about 12 weight % of resistant maltodextrin, up to 3 weight %, preferably about 2 weight % of wheat fibre, up to 3 weight %, preferably about 0,5 weight % of carrageenan, and said sweetener composition comprises up to 30 weight %, preferably about 20 weight % of isomalt, up to 3 weight %, preferably about 0,15 weight % of sucralose, the total of the sugar replacement composition being 100 weight %.

**Table 7. Sugar replacement composition, according to preferred specific embodiment of the invention.**

| Ingredient | Minimum relative amount (Weight %) | Maximum relative amount (Weight %) | Preferred relative amount (Weight %) |
|---|---|---|---|
| Polysaccharide, polydextrose | 45 | 55 | 50 |
| Polysaccharide, inulin | 0 | 25 | 7 |
| Oligosaccharide oligofructose | 5 | 30 | 8 |
| Poly/oligosaccharide, resistant maltodextrin | 0 | 20 | 12 |
| Soluble, non selective, non digestible oligosaccharide, carrageenan | 0 | 3 | 0,5 |
| Insoluble, non selective, non digestible oligosaccharide, wheat fibre | 0 | 3 | 2 |
| Low intensity sweetener, Isomalt | 0 | 30 | 20 |
| High intensity sweetener, sucralose | * | * | 0,15 |

| | | | |
|---|---|---|---|
| (*) amount sufficient to provide to the sugar replacement composition a sweetness about equal to the sweetness of sugar. | | | |

According to an interesting embodiment of the invention, as represented in table 8, sugar is only partially replaced by components of the sugar replacement composition.

**Table 8. Partial sugar replacement composition, according to an interesting embodiment of the invention.**

| Ingredient | Minimum relative amount (Weight %) | Maximum relative amount (Weight %) |
|---|---|---|
| Polydextrose | 30 | 60 |
| Inulin | 0 | 25 |
| Oligofructose | 5 | 30 |
| Resistant maltodextrin | 0 | 20 |
| Sucrose | 0 | 65 |
| High intensity sweetener | * | * |

| | | |
|---|---|---|
| (*) amount sufficient to provide to the sugar replacement composition a sweetness about equal to the sweetness of sugar. | | |

Other details and features of the invention will become clear from the following description of specific embodiments of the invention, which are given by way of illustration only and are not restrictive in any respect.

The basic ingredients of the sugar replacement composition according to the invention are the following:
- a bulking fibre composition comprising:
   - polysaccharide that is preferably prebiotic such as polydextrose, inulin and/or resistant maltodextrin;
   - oligosaccharide that is preferably prebiotic such as oligofructose and/or resistant maltodextrin;
   - optionally, soluble, non selective, non digestible polysaccharide such as carrageenan, xanthan, guar gum, arabic gum, carboxymethylcellulose and/or pectin; and
   - optionally, insoluble, non selective, non digestible polysaccharide such as wheat fibre; and
- a sweetener composition comprising:
   - high intensity sweetener such as sucralose, acesulfame K and/or neohesperidine DC;
   - optionally, low intensity or bulk sweetener such as maltitol and/or isomalt; and
   - optionally, flavour enhancer such as glucono-δ-lacton.

Specific embodiments of the sugar replacement composition comprise specific combinations of the above ingredients.

The sweetener composition comprises a high intensity sweetener, of which examples are listed in table 9, and, optionally, a low intensity sweetener. Preferably, the caloric value of the sugar replacement composition should not exceed 200 kcal/100 g, more specifically 150 kcal/100 g. Both, the high and low intensity sweeteners are preferably non-metabolisable.

**Table 9. Examples of high intensity sweeteners.**

| High intensity sweetener | Sweetness relative to sucrose (=1) |
|---|---|
| Cyclamate | 30-50 |
| Aspartame | 120-200 |
| Saccharin | 250-300 |
| Stevioside | 300 |
| Sucralose | 600 |
| Monellin | 1500-2000 |
| Neohesperidine DC | 1800 |
| Alitame | 2000 |
| Thaumatin | 2000-3000 |
| Neotame | 8000 |

The low intensity sweetener is in particular a bulk sweetener having a sweetness that is lower than that of sucrose. However, the low intensity sweetener may also have a sweetness that is about equal to that of sucrose or is at least in same order of magnitude as that of sucrose.

The low intensity sweetener may be present in an amount up to 40 weight %, in particular from 10 to 40 weight %, preferably from 10 to 30 weight % of the sugar replacement composition.

In a first specific embodiment of the invention, as represented in table 10, maltitol is used as low intensity sweetener, preferably in a concentration below 30 weight %. In a second specific embodiment of the invention, as represented in table 11, isomalt is used as low intensity sweetener, preferably in a concentration below 20 weight %. Maltitol and isomalt have a dual function in the mixture. Firstly, they are bulk sweeteners. Maltitol has a sweetness that is equal to about 90 % of the sweetness of sucrose. Isomalt has a sweetness that is equal to about 50 % of the sweetness of sucrose. Its negative heat of solution is very similar to that of sucrose. This means that, unlike other polyols, isomalt exhibits no cooling effect. Secondly, the molecular weights, and also their structures, are similar to that of sucrose, which makes them suitable replacements for sugar in many applications.

**Table 10. Sugar replacement composition, according to a first specific embodiment of the invention.**

| Ingredient | Minimum relative amount (Weight %) | Maximum relative amount (Weight %) |
|---|---|---|
| Polydextrose | 30 to 40 | 55 to 60 |
| Oligofructose | 3 to 5 | 10 to 30 |
| Maltitol | 0 to 5 | 20 to 30 |
| Acesulfame K | * | * |
| Neohesperidine DC | * | * |

| | | |
|---|---|---|
| (*) amount sufficient to provide to the sugar replacement composition a sweetness about equal to the sweetness of sugar. | | |

In the sweetener composition according to the invention, the problem regarding replacing the bulking and texturing function of sugar can only partially be solved by the addition of maltitol and isomalt. Functionally, maltitol and isomalt are not able to replace sucrose completely. For instance, unlike sucrose, maltitol and isomalt, like other polyols, do not brown or caramelize. Nevertheless, maltitol and isomalt have a sweet taste that is very similar to the sweet taste of sucrose and exhibit negligible cooling effect in the mouth compared to most other polyols.

**Table 11. Sugar replacement composition, according to a second specific embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Resistant maltodextrin | 0 to 10 | 15 to 20 |
| Wheat fibres | 0 to 0,05 | 8 to 10 |
| Isomalt | 0 to 5 | 15 to 20 |
| Acesulfame K | * | * |
| Neohesperidine DC | * | * |

| | | |
|---|---|---|
| (*) amount sufficient to provide to the sugar replacement composition a sweetness about equal to the sweetness of sugar. | | |

A high intensity sweetener is used in the composition in order to provide to the sugar replacement composition a sweetness that is about equal to the sweetness of sugar. Consequently, the high intensity sweetener has a sweetness that is higher than the sweetness of sucrose. Preferably, the high intensity sweetener is at least 30 times as sweet as sucrose. Such high intensity sweeteners are known to the man skilled in the art. Some examples of these high intensity sweeteners are listed in table 9.

As an example, Acesulfame K (Ace K) and Neohesperidine DC (NHDC) are artificial sweeteners that are used in the first and second embodiments of the invention. Although AceK has a sweetness that is 200 times as high as sucrose, it appears to have a bitter and metallic aftertaste when used alone in foods and drinks. Neohesperidine DC (NHDC) is about 200 to 1500, and even 1800, times as sweet as sucrose on threshold levels, but it is, more importantly, a perfect flavour enhancer and masks the unpleasant aftertaste of AceK. The combination of these artificial sweeteners results in a synergistic effect. Optimally the ratio of Acesulfame K to Neohesperidine DC is about 9,5 to 11,5, and in particular between 10,0 and 11,0.

The high intensity sweetener may be used in combination with a flavour enhancer such as glucono-δ-lacton. In the above example with Acesulfame K (Ace K) and Neohesperidine DC (NHDC), glucono-δ-lacton can be used in an amount of 0,15 weight %. Glucono-δ-lacton enhances the perception of the initial sweet taste of Neohesperidine DC.

A third specific embodiment of the invention, as represented in table 12, uses sucralose as high intensity sweetener.

**Table 12. Sugar replacement composition, according to a third specific embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Resistant maltodextrin | 0 to 10 | 15 to 20 |
| Wheat fibres | 0 to 0,05 | 8 to 10 |
| Carageenan | 0 to 0,05 | 1,5 to 2 |
| Isomalt | 0 to 5 | 15 to 20 |
| Sucralose | * | * |

| | | |
|---|---|---|
| (*) amount sufficient to provide to the sugar replacement composition a sweetness about equal to the sweetness of sugar. | | |

It should be clear that other high intensity sweeteners may also be used and that the high intensity sweetener used in the different embodiments are interchangeable for the purpose of the invention. However, some high intensity sweeteners may be preferred above others.

According to the invention, part of the sucrose is replaced by a bulking fibre composition that comprises mainly so-called prebiotic fibres. Preferably, these fibres contain oligosaccharide and/or polysaccharide polymers of mainly glucose units and also oligosaccharide and/or polysaccharide polymers of mainly fructose units.

According to the first, second and third embodiments of the invention, as represented in tables 1 to 12, polydextrose is used as a prebiotic, non digestible polysaccharide in the fibre composition.

Polydextrose is present in an amount of 30 to 60 weight %, preferably 40 to 55 weight %.

Polydextrose is a polysaccharide composed of glucose units with randomly cross-linked bonds, with 1→6 bonds predominating, containing minor amounts of bound sorbitol and acid. The average degree of polymerisation (DP) of polydextrose is about 12.

Polydextrose is commonly used as bulking agent in sugar replacement compositions but has some major drawbacks. It is hygroscopic, which may result in a sticky texture of the final product. Polydextrose also does not participate in browning reactions that may be desired for some baked food products. Hence, polydextrose as sole bulking agent in sugar replacement compositions does not provide the desired functionality of sugar.

Furthermore, according to the second and third embodiments of the invention, represented in tables 11 and 12, inulin is also used as a prebiotic, non digestible polysaccharide in the fibre composition. Inulin is present in an amount up to 25 weight %, preferably between 5 and 15 weight %. Inulin is a polymer of D-fructose residues linked by β-(2→1)-linkages with a terminal β-(2→1)-linked glucose residue. Inulin occurs in over 10 000 different crops but on industrial scale it is extracted from chicory roots. The degree of polymerisation (DP) of inulin usually ranges from 10 to about 60. For the purpose of the invention a DP below 40 is preferred, or even below 20.

According to the first, second and third specific embodiments of the invention, represented in tables 10 to 12, oligofructose is used as prebiotic, non digestible oligosaccharide in the fibre composition. Preferably this oligofructose has a DP of 2 to 8 and is present in an amount of 3 to 30 weight %, preferably 5 to 10 weight %. More particularly, the oligofructose used in the mixture can be a fructan type oligosaccharide, produced through one of the following manufacturing processes: (i) hydrolysis or enzymatic degradation of inulin to oligofructose having a DP that ranges from 2 to about 8; or (*ii*) transfructosylation of a β-fructosidase of Aspergillus niger on sucrose. The latter type of oligofructose, also called fructo-oligosaccharide, always has a terminal glucose residue, since it is derived from sucrose. Typically, this oligofructose has a DP ranging from 3 to 5. Contrary to the oligofructose derived from inulin hydrolysis, this type contains other linkage types in addition to the β-(2→1)-bonds, be it in limited numbers. For purpose of the invention, fructo-oligosaccharide is preferred. This type of oligofructose contains less free sucrose and/or fructose and has a fixed distribution of polymerisation. The terminal reducing sugar group of fructo-oligosaccharide is a glucose residue, which is less reactive in Maillard reaction than the terminal fructose residue of most of the oligofructose derived from inuline. The latter may result in undesired browning reactions.

Furthermore, in the second and third embodiments of the invention, represented in tables 11 and 12, resistant maltodextrins are also used as prebiotic fibre in the fibre composition. These resistant maltodextrins are also called resistant dextrins or indigestible dextrins.

Resistant maltodextrins are glucose polymers having primarily α-(1→4) and α-(1→6) glycosidic linkages found in starch and also additional glycosidic linkages normally not found in starch. They have a more highly branched structure than amylose and amylopectin as found in starch. Due to their overall tertiary chemical structure they are resistant to digestion, which means that they are not broken down by human digestive enzymes. Nevertheless, resistant maltodextrin exhibits all or nearly all the technological properties of digestible maltodextrins.

Part of the resistant maltodextrin, i.e. oligosaccharide resistant maltodextrin, can be classified as oligosaccharide and part of the resistant maltodextrin, i.e. polysaccharide resistant maltodextrin, can be classified as polysaccharide.

In the second embodiment of the invention, represented in table 11, resistant maltodextrin is present in an amount up to 20 weight %, preferably 10 to 15 weight %. About 40 to 60 weight % of the resistant maltodextrin is oligosaccharide resistant maltodextrin and has a DP below 10. Preferably about 50 % of the resistant maltodextrin has a DP above 11.

Compared to oligofructose, resistant maltodextrin offers the advantage that there is no sudden and excessive fermentation in the large intestine that can cause flatulence, abdominal pain and/or diarrhoea.

One of the most important roles of oligofructose, resistant maltodextrin, inulin and polydextrose in the compositions according to the present invention lies in their prebiotic properties. Combining short chain, i.e. DP up to 10, and long chain, i.e. DP ranging from 10 up to 60, prebiotic fibres assures that a selective energy source is available for beneficial bacteria along the colon, from the beginning to the end. Short chain fibres, e.g. oligofructose, are fermented first, in the beginning of the colon. Long chain fibres, e.g. inulin, are available for fermentation during the transit in the colon up to the end of the colon. This results in the production of SCFA along the complete trajectory in the colon and a corresponding overall reduction of the pH in the colon. Due to the lower pH, uptake of Ca and Mg is improved along the complete colon. Polydextrose is also not digested or absorbed in the small intestine, but partially fermented in the large intestine. Fermentation of polydextrose also leads to the growth of favourable microflora, diminished putrefactive microflora and enhanced production of short chain fatty acids. This leads to increased faecal bulk, reduced transit time, softer stools and lower faecal pH, from 4 to 9.

Another important role of oligofructose, resistant maltodextrin, inulin and polydextrose in the compositions according to the present invention is to provide at least the same functionality to the sugar replacement composition as sucrose. It is important that products containing the sugar replacement composition can be processed in the same manner as products which contain sucrose. Further, those processed products should have the same properties with regard to, for instance, palatability and appearance.

Although oligofructose has also low sweetness intensity, which is inversely correlated with the DP, the sweetness is provided for by the sweetener composition as discussed above. The sweetener composition can only partially replace the functionality of sucrose such as sweetness. It is, for instance, not suitable for obtaining the same brown colouring effect or caramelizing effect as sucrose when heated.

According to the second and third embodiments of the invention, the sugar replacement composition can contain four prebiotic fibres, i.e. oligofructose, resistant maltodextrin, inulin and polydextrose, in fixed ratios. Combining oligofructose, resistant maltodextrin, inulin and polydextrose, according to the invention, results in an optimal sugar substitute with regard to e.g. the capability of caramelization of the product or, e.g. for baked food products, the ability to be processed, the brown colouring effect and the brilliance of the crust.

The presence of oligofructose is necessary for certain applications such as baked products in which a brown colouring is required. The concentration of oligofructose should not be too high, i.e. not higher than 30 weight % and preferably not higher than 25 weight %, in order to prevent a too high brown colouring effect during baking processes. Compared to oligofructose derived from inulin, fructo-oligosaccharide has the advantage that its reducing sugar groups, i.e. glucose, are less reactive in Maillard reaction. Further, nearly no free fructose or sucrose is present, which otherwise could result in undesired brown colouring effects in baked food products.

With respect to flatulence problems it is preferred that the concentration of oligofructose should not be higher than 10 weight %. Accordingly, part of the oligofructose in the second and third embodiments of the invention is replaced by resistant maltodextrin. Preferably, the second and third embodiments of the invention have a concentration of oligofructose between 5 and 10 weight % of the sugar replacement composition and a concentration of resistant maltodextrin, including oligo- and polysaccharide resistant maltodextrin, between 10 and 20 weight % of the sugar replacement composition.

Further, the presence of oligofructose is required in certain baked food products for obtaining a brilliant crust which would also be obtained by using sucrose.

Leaving out one of the four prebiotic fibres from e.g. the second or the third embodiments of the invention may result in food products that are less acceptable regarding the ability to be processed, the brown colouring and brilliance of the crust, but can be acceptable for certain applications such as for example sweet liquid food drinks, such as coffee, tea, soft drinks.

The prebiotic, non digestible oligo- and polysaccharides fulfil dual roles in the sugar replacement composition: they are versatile ingredients, which function as functional and bulk sugar replacements, and as source of prebiotic fibres.

Furthermore, basic formulations of the present invention supplemented with probiotic bacterial strains belonging to for instance either the *Bifidobacterium* or *Lactobacillus* genus, provides both the probiotic strains and a selective energy source, resulting in a so-called synbiotic effect. In this way, the gut flora is supplemented with fresh bacteria, their nutrition, and also nutrition for existing beneficial microflora, which enriches the microbial population of the human colon.

The increase in microbial population is only one result of fibre intake and assimilation. Due to digestion of fibres present in the basic formulation, short chain fatty acids are produced which lower the pH in the colon. This pH drop is important for e.g. Ca- and Mg-uptake, which are essential minerals.

In order to further improve the functionality of the sugar replacement composition, insoluble, non selective, non digestible polysaccharides may be added to the sugar replacement composition according to the second and third embodiments of the invention, as represented in tables 11 and 12. These polysaccharides may be present in an amount of 0,05 weight % to 10 weight %.

The amount of soluble and insoluble fibres may be determined by one of the following analytical methods: Mongeau R. and Brassard R., Enzymatic gravimetric determination in foods of dietary fibre as the sum of insoluble and soluble fibre fractions: summary of collaborative study, J. AOAC Int. 76:923-925, 1993; and Prosky L. et al., Determination of total dietary fibre in foods and food products: collaborative study, J. Assoc. Off. Anal. Chem. 68:677-679, 1985.

Examples of insoluble, non selective, non digestible polysaccharides are cellulose and hemicellulose that are present in, for instance, cereal fibre such as wheat fibre.

Advantageously, in the second and third embodiments of the invention, wheat fibres are used that have an average length between 20 and 80 µm and preferably of 30 µm. They consist of approximately 76 weight % of cellulose and 24 weight % of hemicellulose. For baked products the combination of oligofructose and these wheat fibres result in a crust colour and brilliance that is similar to the crust appearance that would be obtained when using sucrose. Further, this also results in a homogeneous crumb of the baked food products which is similar to the crumb obtained by using sucrose.

The use of oligofructose in the sugar replacement composition without wheat fibres may result in a too dark crust and crumb of the baked products. Wheat fibres have indeed a bleaching effect.

For certain applications, the amount of insoluble fibres in the sugar replacer should be limited to e.g. below 5 weight % and preferably below 3 weight %. Higher amounts may result in an undesired fibre texture when sugar is being replaced in, for instance, recipes wherein the sugar is melted and/or caramelized.

These non digestible, insoluble fibres also show some health promoting effects in, for instance, the prevention of constipation and the decrease of glucose levels in the blood of people with diabetes.

Further, soluble, non selective, non digestible polysaccharides can be added to the sugar replacement composition according to the third and a fourth embodiment of the invention, as represented in tables 12 and 13. These polysaccharides may be present in an amount of 0,05 weight % to 10 weight %.

**Table 13. Sugar replacement composition, according to a fourth specific embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Wheat fibres | 0 to 0,05 | 8 to 10 |
| Carboxymethylcellulose | 0 to 0,05 | 8 to 10 |
| Maltitol | 0 to 5 | 20 to 30 |
| High intensity sweetener | * | * |

| | | |
|---|---|---|
| (*) amount sufficient to provide to the sugar replacement composition a sweetness about equal to the sweetness of sugar. | | |

Examples of soluble, non selective, non digestible polysaccharides are xanthan, tara, carrageenan, tragacanth, locust bean gum, agar, guar gum, arabic gum, carboxymethylcellulose, and pectin.

These polysaccharides increase the water retention in the final food product which results in increased shelf life and softness.

In the third embodiment of the invention, represented in table 12, kappa carrageenan can be added in an amount between 0,05 and 2 weight %, preferably between 0,05 and 1 weight %, about 0,5 weight %.

In particular, addition of carboxymethylcellulose, or a co-processed blend of carboxymethylcellulose with microcrystalline cellulose, in the fourth embodiment of the sugar replacement composition also provides the food preparation with the desired viscosity, which would also be obtained by using sugar.

These non selective polysaccharides do not selectively promote growth and proliferation of beneficial bacteria in the colon, but are non selectively fermented into short chain fatty acids (SCFA), which are important for the prevention of colon cancer. In particular, butyric acid, which is the most important energy source for epithelium cells, is important in this respect. Interestingly, combining intake of guar and pectin has a synergistic effect on production of butyric acid in the colon. Further, these soluble, non selective, non digestible polysaccharides, such as carboxymethylcellulose, may also reduce fat absorption.

Too high intake of prebiotic or other non digestible poly- and oligosaccharides may result in flatulence and may also have a laxative effect as also discussed above. A too high dose of some polyols may have similar effects. Soluble, non selective, non digestible polysaccharides such as guar gum, arabic gum, carboxycellulose and pectin suppress these effects.

Optionally, an anti-caking agent such as SiO₂ is used in the formulations according to the present invention. Many ingredients in the food industry tend to show poor flow properties and cake when stored. SiO₂ shows a high absorption capacity, thus drying the surface of the food ingredients particles and subsequently preventing them from sticking together. Furthermore, they keep the particles apart and allow them to glide past each other. SiO₂ is used in an amount between 0,1 and 0,5 weight %.

Wheat fibres included in the second, third and fourth embodiments also have anti-caking properties.

A fifth specific embodiment of the invention is represented in table 14.

**Table 14. Sugar replacement composition, according to a fifth specific embodiment of the invention.**

| Ingredient | Minimum relative amount (Weight %) | Maximum relative amount (Weight %) |
|---|---|---|
| Polydextrose | 30 to 40 | 55 to 60 |
| Inulin | 0 to 5 | 15 to 25 |
| Oligofructose | 3 to 5 | 10 to 30 |
| Resistant maltodextrin | 0 to 10 | 15 to 20 |
| Wheat fibres | 0 to 0,05 | 8 to 10 |
| Carageenan | 0 to 0,05 | 1,5 to 10 |
| Carboxymethylcellulose | 0 to 0,05 | 8 to 10 |
| Isomalt | 0 to 5 | 15 to 20 |
| High intensity sweetener | * | * |

| | | |
|---|---|---|
| (*) amount sufficient to provide to the sugar replacement composition a sweetness about equal to the sweetness of sugar. | | |

A sixth and seventh specific embodiment of the invention concern a partial sugar replacement composition according to the invention in which sugar is still present. These embodiments are represented in tables 15 and 16.

**Table 15. Sugar replacement composition, in particular a partial sugar replacement composition, according to a sixth specific embodiment of the invention.**

| Ingredient | Minimum relative amount (Weight %) | Maximum relative amount (Weight %) |
|---|---|---|
| Polydextrose | 0 to 0,05 | 55 |
| Inulin | 15 | 25 |
| Oligofructose | 0 to 0,05 | 30 |
| Resistant maltodextrin | 10 | 20 |
| Wheat fibres | 0 to 0,05 | 10 |
| Carageenan | 0 to 0,05 | 2 |
| Carboxymethylcellulose | 0 to 0,05 | 10 |
| Sucrose | 0 to 0,05 | 60 |
| High intensity sweetener | * | * |

| | | |
|---|---|---|
| (*) amount sufficient to provide to the sugar replacement composition a sweetness about equal to the sweetness of sugar. | | |

**Table 16. Sugar replacement composition, in particular a partial sugar replacement composition, according to a seventh specific embodiment of the invention.**

| Ingredient | Minimum relative amount (Weight %) | Maximum relative amount (Weight %) |
|---|---|---|
| Polydextrose | 30 | 60 |
| Inulin | 0 to 0,05 | 25 |
| Oligofructose | 5 | 30 |
| Resistant maltodextrin | 0 to 0,05 | 20 |
| Sucrose | 0 to 0,05 | 40 |
| High intensity sweetener | * | * |

| | | |
|---|---|---|
| (*) amount sufficient to provide to the sugar replacement composition a sweetness about equal to the sweetness of sugar. | | |

In the sixth specific embodiment sugar is used in combination with as bulking fibre composition containing inulin and resistant maltodextrin and optionally also polydextrose and oligofructose.

In the seventh specific embodiment, sugar is used together with polydextrose and oligofructose, and preferably also resistant maltodextrin and inulin. Further, a high intensity sweetener is added in an amount sufficient to provide to the mixture a sweetness about equal to the sweetness of sugar.

In the following, some examples of basic formulations for a sugar replacement composition according to the invention are given. Further, some examples of food preparations are given for the illustration of the invention.

In the first four examples, basic formulations for sugar replacement compositions according to the present invention are given. These formulations allow replacing sugar in e.g. cakes on a weight by weight basis, without negative effects on taste, appearance, texture and palatability. The precise amounts of the different ingredients can of course be varied to some degree.

In the **first example** of a basic formulation for a sugar replacement composition, according to the first embodiment of the invention, the following ingredients are mixed to form the 1/1 weight sugar replacement composition:

| Ingredient | Weight (g) | Weight % |
|---|---|---|
| Polydextrose | 97,17 | 48,585 |
| Oligofructose | 42,00 | 21,000 |
| Maltitol | 60,00 | 30,000 |
| Acesulfame K | 0,30 | 0,150 |
| Neohesperidine DC | 0,03 | 0,015 |
| SiO₂ | 0,50 | 0,250 |
| Total: | 200,00 g | 100 % |

In the **second example** of a basic formulation for a sugar replacement composition, according to the second embodiment of the invention, the following ingredients are mixed to form the 1/1 weight sugar replacement composition:

| Ingredient | Weight (g) | Weight % |
|---|---|---|
| Polydextrose | 100,87 | 50,435 |
| Inulin | 14,00 | 7,000 |
| Oligofructose | 20,00 | 10,000 |
| Resistant maltodextrin | 20,00 | 10,000 |
| Wheat fibres | 4,00 | 2,000 |
| Isomalt | 40,00 | 20,000 |
| Acesulfame K | 0,30 | 0,150 |
| Neohesperidine DC | 0,03 | 0,015 |
| Glucono-δ-lacton | 0,30 | 0,150 |
| SiO₂ | 0,50 | 0,250 |
| Total: | 200,00 g | 100 % |

In the **third example** of a basic formulation for a sugar replacement composition, according to the third embodiment of the invention, the following ingredients are mixed to form the 1/1 weight sugar replacement composition:

| | | |
|---|---|---|
| Ingredient | Weight (g) | Weight % |
| Polydextrose | 100,20 | 50,100 |
| Inulin | 14,00 | 7,000 |
| Oligofructose | 16,00 | 8,000 |
| Resistant maltodextrin | 24,00 | 12,000 |
| Wheat fibres | 4,00 | 2,000 |
| Carageenan | 1,00 | 0,500 |
| Isomalt | 40,00 | 20,000 |
| Sucralose | 0,30 | 0,150 |
| SiO₂ | 0,50 | 0,250 |
| Total: | 200,00 g | 100 % |

In the **fourth example** of a basic formulation for a sugar replacement composition, according to the fourth embodiment of the invention, the following ingredients are mixed to form the 1/1 weight sugar replacement composition:

| Ingredient | Weight (g) | Weight % |
|---|---|---|
| Polydextrose | 101,870 | 50,935 |
| Inulin | 14,00 | 7,000 |
| Oligofructose | 20,00 | 10,000 |
| Wheat fibres | 2,00 | 1,000 |
| Carboxymethylcellulose | 1,00 | 0,500 |
| Maltitol | 60,00 | 30,000 |
| Acesulfame K | 0,30 | 0,150 |
| Neohesperidine DC | 0,03 | 0,015 |
| Glucono-δ-lacton | 0,30 | 0,150 |
| SiO₂ | 0,50 | 0,250 |
| Total: | 200,00 g | 100 % |

A **fifth example** concerns a recipe for "quatre quarts cake" in which the following ingredients are used:
- 3 medium sized eggs;
- 22,5 ml skimmed milk;
- 225 g flour;
- 140 g butter;
- 1,5 ml of vanilla flavour; and
- 225 g of sugar replacement composition of the third example.

The eggs and the milk are mixed with the sugar replacement composition. Soft or slightly heated butter is added, using a wooden spatula. Subsequently, the flour is putted through a sieve and carefully added. The whole is well blended into a smooth paste. The vanilla flavour is added. The dough is poured in a buttered rectangular baking pan and baked in a warm oven at 175 °C, for about 60 minutes. The blade of a knife should come out clean and dry if the cake is ready. The cake is taken out of the oven and unmoulded. Leave to cool.

In a **sixth example**, basic biscuits are prepared, which are fortified with calcium ("calcium fortified cookies"). Due to the presence of prebiotic fibres in the sugar replacement composition, the calcium absorbability will be increased.

The following ingredients are used for "calcium fortified cookies":
- 100 g flour;
- 100 g butter;
- 105 g sugar replacement of the composition of the first example;
- 3 medium sized eggs;
- 1 ml vanilla flavouring;
- 5,2 g calcium citrate.4H₂O.

Mix the butter, sugar replacement composition of the first example and the vanilla flavouring to obtain a smooth dough. Subsequently add the beaten eggs and the sieved flour. Mix the whole composition, without beating to avoid too much air in the mixture. Grease the baking plate and spout the dough in 8 cm bars on a distance of app. 5 cm. Bake the cookies during 10 minutes in a preheated oven at 150-175 °C. After baking, immediately remove the cookies from the tray and leave them to cool on a grid.

By using the basic formulation of the sugar replacement composition of the second and third example, the amount of fat, i.e. butter, used in most recipes can be reduced to 70 % or even 50 %. In the fifth example the fat has been reduced to 70 % compared to a cake prepared with sugar, without giving up taste, appearance and texture. When using oil, e.g. coleseed oil, in stead of butter, a further reduction in fat to 30% can be obtained.

Properties, such as taste, appearance and texture, of the prepared food products of examples five and six, are not distinguishable from the properties of these food products prepared with sucrose. Similar results are obtained when the sugar replacement composition of the third example is used in the recipe of the sixth example or when the sugar replacement composition of the second example is used in the recipes of the fifth and sixth examples. It should be clear that the sugar replacement compositions of the first, second, third and fourth examples can be used in both the recipes of the fifth and sixth examples.

A **seventh example** concerns another recipe for "cake", in which the following ingredients are used:
- 500 g eggs;
- 100 g milk;
- 500 g flour;
- 300 g butter;
- 60 g coleseed oil;
- 8 ml vanilla flavour; and
- 500 g sugar replacement composition of the third example.

Preheat oven to 230 °C. Cream the butter until softened. Mix the eggs and vanilla extract by hand, add milk and mix again. Add sugar and mix vigorously in a food processor. Blend in the soft butter and oil to make a soft dough. Fold in the flour and mix thoroughly. Pipe 30 g of the mix into small paper cake moulds and place on a wire rack. When put in oven lower temperature directly to 200 °C. Bake for 28 minutes. Lower temperature during baking process and bake last 10 minutes at 160 °C.

The thus prepared baked products, with either the sugar replacement composition or the same amount of sugar, were subjected to a consumer acceptance test performed by V-G Sensory, Deinze, Belgium. A taste panel of 62 respondents composed of 50 % of men and 50 % of women, of which 31 % between 18 and 35 years old, 35 % between 36 and 50 years old, and 34 % older than 50 years, were asked to taste a cake with sugar and a cake with the sugar replacer, prepared according to the above mentioned recipe and procedure. The following criteria were evaluated:
- crumb color,
- crust color,
- mouthfeel,
- taste.

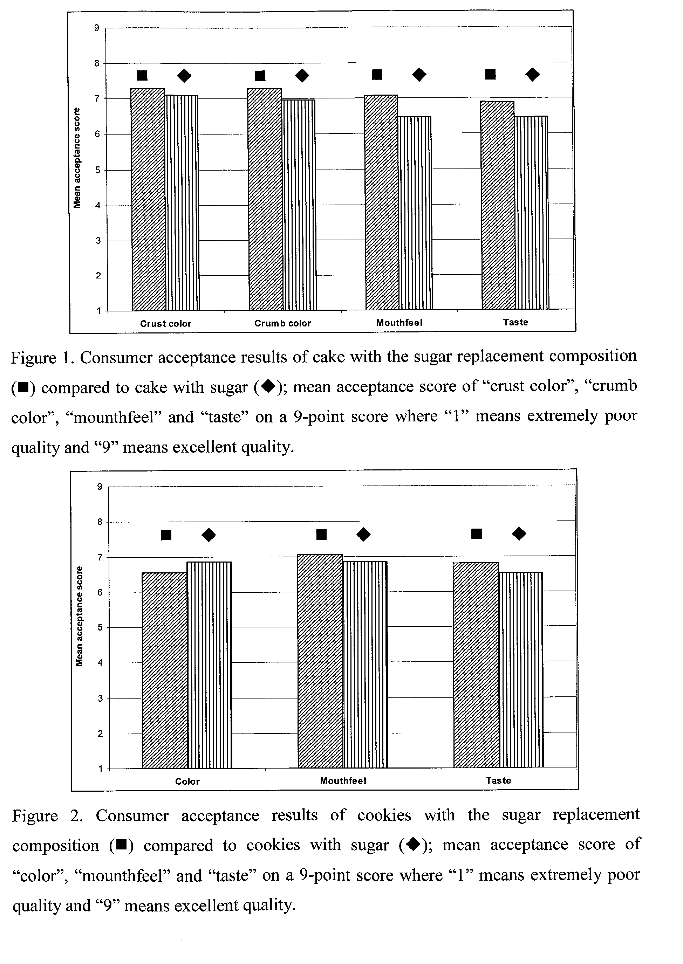

Figure 1 shows the results obtained by the taste panel, on a 9-point score, where "1" means extremely poor quality and "9" means excellent quality. Chi-squared statistic and Kolmogorov-Smirnov test were used to determine significant differences among the obtained results. From these tests, it was concluded that - for both the crumb color and mouthfeel - those cakes prepared with the sugar replacement composition according to the invention, scored significantly better than the sugar containing cakes. The overall conclusion of the statistical evaluation was that "there is a tendency to significance: sugar-free cakes are preferred over sugar-containing cakes".

An **eighth example** concerns a recipe for "butter cookies" in which the following ingredients are used:
- 150 g eggs;
- 410 g flour;
- 260 g pasteurized butter;
- 4 g salt;
- 4 ml vanilla flavour; and
- 200 g sugar replacement composition of the third example.

Preheat oven to 165 °C. Cream the butter until softened. Place slightly beated eggs, vanilla extract and salt in a food processor. Blend in the soft butter to make a soft dough. Sift together the flour and sugar. Fold in the flour-sugar mixture and mix gently. Pipe onto un greased baking plate. Bake at 165 °C for 14 minutes, until golden and slightly browned around the edges. Cool the cookies on a wire rack.

The thus prepared baked products, with either the sugar replacement composition or the same amount of sugar, were subjected to a consumer acceptance test performed by V-G Sensory, Deinze, Belgium. A taste panel of 62 respondents composed of 50 % of men and 50 % of women, of which 31 % between 18 and 35 years old, 35 % between 36 and 50 years old, and 34 % older than 50 years, were asked to taste cookies with sugar and a cookies with the sugar replacer according to the invention, prepared according to the above mentioned recipe and procedure. The following criteria were evaluated:
- color,
- mouthfeel,
- taste.

Figure 2 shows the results obtained by the taste panel, on a 9-point score, where "1" means extremely poor quality and "9" means excellent quality. Chi-squared statistic and Kolmogorov-Smirnov test were used to determine significant differences among the obtained results. The overall conclusion of the statistical evaluation was that "there is a tendency to significance: sugar-free cookies are preferred over sugar-containing cookies".

The sugar replacement composition according to the present invention is perfectly capable of replacing sugar in jams or pastry cream. Moreover, the gelling properties of these jams are improved by substituting sugar.

Sugar is essential in the gelling process of jams, preserves, jellies, pastry creams, custards, ... to obtain the desired consistency and firmness. This gelling process causes fruit juices to be enmeshed in a network of fibres. For the preparation of sugar containing jams, usually pectin is added since it is a naturally occurring compound in fruits, and it has the ability to form a gel in the presence of sugar and acid. Sugar is an essential component, because it attracts and holds water during the gelling process.

Replacing sugar by the sugar replacement composition according to the invention in fruit jams and marmalades has also the advantage that no supplementary gelling agents need to be added. Compared to jams made with sugar, gelling occurs faster and remains better.

A **ninth example** concerns the gelation of jams in which the following ingredients are used:
- 1.750 g strawberries; and
- 1.312,5 g sugar replacement composition of the third example.

After cleaning and washing the ripe strawberries, mash the fruit. Place strawberries on a cooking ring and simmer over a low heat until the fruit has softened and become mushy. Add sugar or the sugar replacer, and mix well until sugar/sugar replacer is completely dissolved. Raise the heat and boil for another 20 minutes.

By determining both the linear visco-elastic range (LVR) and phase angle in an oscillatory viscosity measurement, gel strength can be measured accurately without destroying the network that creates the gel. The methods for these tests are described more in detail in: Mitchell, J.R. (1980), The rheology of gels. Journal of Texture Studies, 11, 315-337; Stading, M. (1991), Gel structure and rheology in theory and practice - a literature review. SIK-report, 553, 207 p; and Stanley, D.W. et al. (1996). Mechanical properties of food. In: Nollet, L.M.L. (ed.). Handbook of food analysis - volume 1: Physical characterization and nutrient analysis. New York, Marcel Dekker, 93-137.

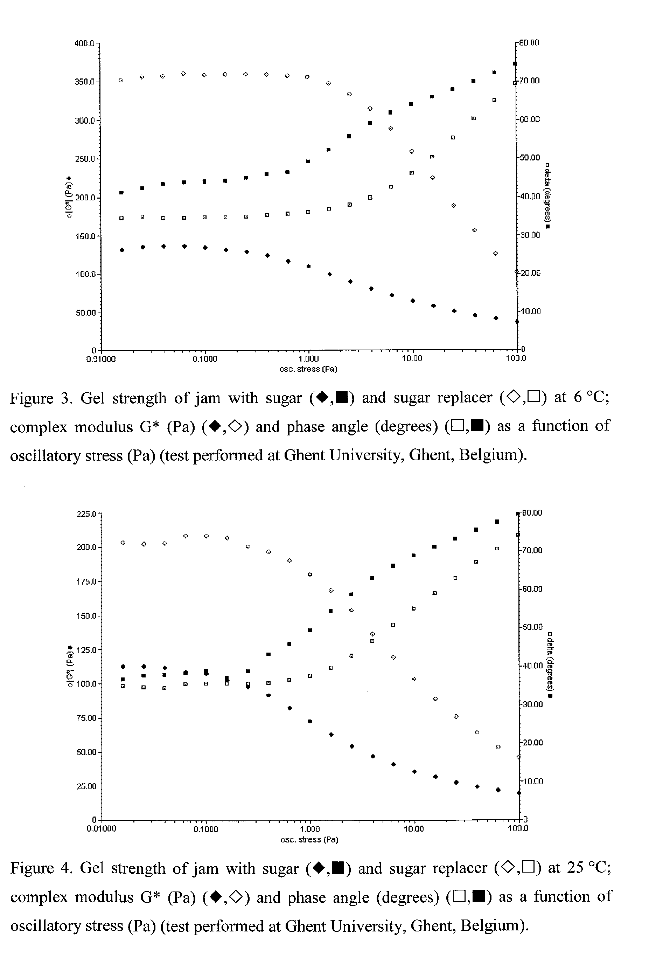

Figure 3 illustrates the results of the test performed at Ghent University, Ghent, Belgium, where the gel strength of jam with sugar and sugar replacer are compared at refrigerator temperature, i.e. 6°C. Figure 4 show the results of a similar test performed at room temperature, i.e. 25 °C. The gel formed in the jam prepared with the composition according to the invention, is stronger than when sugar is used. This can be derived from the higher complex modulus, i.e. G*-value, and the larger LVR.

Pastry creams often need to be frozen and subsequently unfrozen. Shelving, freezing and unfreezing may cause loss of water resulting in a layer of water on top of the pastry cream prepared with sugar. A **tenth example** concerns the gelation of pastry creams in which the following ingredients are used:
- 51 g egg yolk;
- 50 g egg;
- 80 g corn flour;
- 1.000 g milk;
- 4 ml vanilla extract; and
- 250 g sugar replacement composition of the third example.

Under continuous stirring, add the vanilla extract, egg white and yolk, sugar or sugar replacer; and finally the corn flour to the cold milk. Bring to boiling temperature and stir for another two minutes. Cool down gently by placing the bowl containing the pastry cream in an ice bath.

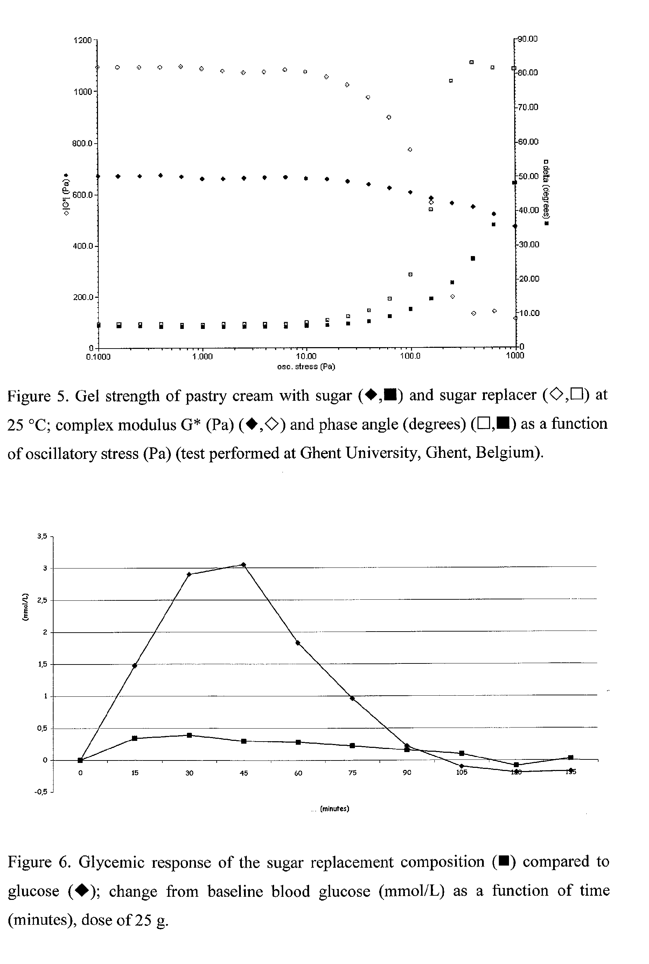

Pastry creams containing the sugar replacement composition according to the invention, have better water retention qualities resulting in higher shelf life. Further, the gelling of the pastry cream occurs faster with the sugar replacement composition compared to sugar. Figure 5 illustrates the results of a test, as described above, performed at Ghent University, Ghent, Belgium where the gelation behaviour of pastry cream prepared with sugar, and prepared with sugar substituted by the sugar replacer are compared.

An **eleventh example** concerns whipped cream in which the following ingredients are used:
- 41,87 g polydextrose;
- 9,60 g resistant maltodextrine;
- 6,40 g fructo-oligosaccharide;
- 5,60 g inulin;
- 0,40 g carrageenan;
- 16,00 g isomalt;
- 0,12 g sucralose;
- 420 g cream with 40 % fat content; and
- 4 ml vanilla extract.

Two different methods were used for preparing whipped cream.

In a first method, sugar or sugar replacer are mixed with 40 % fat cream before they are dissolved. This immediate mixing of the cream with sugar did not result in a stable whipped cream. In contrast, the immediate mixing of the cream with sugar replacer did result in a stable whipped cream.

In a second method, sugar or sugar replacer are dissolving in 40 % fat cream prior to mixing. This resulted for both sugar and the sugar replacer in a stable foam.

The stabilization of whipped cream was analysed by Ghent University, Ghent, Belgium by using the methods as described in detail by Moor & Rapaille, 1982 H. Moor and A. Rapaille, Evaluation of starches and gums in pasteurised whipping cream. In: G.O. Phillips, D.J. Wedlock and P.A. Williams, Editors, Progress in food and nutrition science 6, Pergamon Press, Oxford (1982), pp. 199-207.

As shown in table 16, a higher volume of foam is obtained for cream with sugar replacer compared to cream with sugar when whipping during the same period of time.

**Table 16. Stabilization of whipped cream with the sugar replacement composition compared to sugar.**

| Whipped cream containing | Mean whipping time | Volume increase | Spiral depth measured after 12 sec |
|---|---|---|---|
| sugar | 46 sec | 56,13 ± 7,08 % | 21,67 ± 2,89 mm |
| sugar replacer | 42 sec | 61,13 ± 8,27 % | 16,00 ± 1,00 mm |

Further, the stability of the foam is higher when prepared using the sugar replacer, as illustrated by the spiral depth measured after 12 seconds. This parameter refers to the depth to which a spiral drops in a period of 12 seconds, when released on the surface of the whipped cream and is measured with a Slagsahne Prufgerat apparatus according to the previously mentioned method described by Moor & Rapaille (1982).

In whipped cream production, both stabilization and volume of the foam is improved by substituting sugar by the sugar replacement composition according to the invention.

A **twelfth example** concerns preparation of caramel, in which the following ingredients are used:
- 42,365 g polydextrose;
- 12 g resistant maltodextrine;
- 8 g fructo-oligosaccharide;
- 7 g inulin;
- 0,5 g carrageenan;
- 20 g isomalt;
- 0,135 g sucralose; and
- 100 g water.

The above composition is heated to cooking temperature. Further heat treatment is applied until the water present in the mixture has completely evaporated. From then on, temperatures ranging between 150 °C and 170 °C are maintained, until a desired degree of caramelization has occurred. The caramel can be prepared without addition of sugar or glucose syrups, thus obtaining a low-calorie, fibre-rich caramel with a similar texture and mouthfeel compared to caramels made from sucrose or sugar syrups.

Consequently, the sugar replacement composition according to the current invention can be used as a perfect ingredient mix for the preparation of caramel, in which oligofructose and/or fructo-oligosaccharides having a DP<10 initiate the caramelization reaction. As a result of this reaction, the typical caramel flavour is obtained, whereas the presence of the remaining ingredients delivers the pleasant mouthfeel usually obtained by use of sucrose.

It was expected that the generation of flavours and colours in thermally induced caramelization requires sugars, normally monosaccharide structures, to initiate the reaction. However, analysis of the above composition, performed by SGS Belgium nv, indicates that the amounts of reducing sugars in the product are as follows:
- < 0,05 % fructose;
- < 0,05 % glucose; and
- 0,8 % sucrose.

These figures show that the amount of free sugars, is too low to initiate the caramelization reaction, and it has subsequently been proven that oligofructose and/or fructo-oligosaccharide act as the starting material for this reaction. The hypothesis is that due to the heat treatment, the α-1,2 and β-2,1 bonds are broken down, generating reducing sugars which can then in turn be converted to the typical components of a caramel flavour: furans, furanones, pyrones and carbocyclics. A similar thermal degradation has been described for maltotriose (α-1,4 bonded glucose), which indicated that 3-deoxypentosulose was formed, by a pathway specific for oligo- and polysaccharides since it was formed from the α-1,4-glucans (Hollnagel & Kroh, 2002, Journal of Agricultural and Food Chemistry, 50(6), 1659-1664). However, similar routes for degradation of β-2,1-fructans have not been described.

Consequently, for this application the degree of polymerization of the oligofructose and/or fructo-oligosaccharide is of utmost importance and should be lower than 10, preferably lower than 8, and even more preferably between 3 and 5. Fructans with a DP higher than 10 are not suitable for initiation of the caramelization reaction, not even when they contain a contamination with up to 10 % of mono- and disaccharides.

A **thirteenth example** concerns the preparation of "butterscotch" caramel, in which the same ingredients as for the twelfth example are used, but wherein the water is replaced by 100 g cream with a fat content of 40 %. Further, a small amount, e.g. approximately 5 g, of butter is added.

In chocolate, the replacement of sugar is a difficult task since the smooth mouth feel, specific texture and flavour in these fat-sugar systems is hard to mimic without the addition of sucrose. A **fourteenth example** concerns chocolate, in which the following ingredients are used:
- 18,33 g polydextrose
- 4,20 g resistant maltodextrine;
- 2,80 g fructo-oligosaccharide;
- 2,45 g inulin;
- 0,18 g carrageenan;
- 7,00 g isomalt;
- 0,05 g sucralose;
- 10 g Cacao butter; and
- 55 g cacao mass containing 55 % cacao butter;

A **fifteenth example** concerns chocolate, in which the following ingredients are used:
- 20,42 g polydextrose
- 4,68 g resistant maltodextrine;
- 3,12 g fructo-oligosaccharide;
- 2,73 g inulin;
- 0,20 g carrageenan;
- 7,80 g isomalt;
- 0,05 g sucralose;
- 22 g Cacao butter; and
- 39 g cacao mass containing 55 % cacao butter;

Replacement of sugar by the sugar replacement composition according to the invention as in examples fourteen and fifteen results in a perfect chocolate with improved properties, attributed to the specific composition of this all-purpose sugar replacer.

A **sixteenth example** concerns a partial sugar replacement composition still containing an amount of sucrose.

The sugar replacement composition according to the invention, in particular according to one of the previous examples of the basic formulation, can be used in combination with sugar. A partial sugar replacement composition is obtained by combining the sugar replacement composition and sugar. Accordingly, the sugar replacement composition is added to sugar in concentrations up to e.g. 10 % or more, the weight of the partial sugar replacement composition being 100 %. Hence, the sugar replacement composition according to the invention, can also be used to partially replace sugar, i.e. ranging from a sugar "improver", replacing up to 10 % of the sugar, to a complete sugar "replacer", replacing up to 100 % of the sugar.

In this respect, it is also possible, according to the invention, to replace the low intensity sweetener of the sugar replacement composition by sugar, such that a partial sugar replacement composition is obtained. The amount of high intensity sweetener of this partial sugar replacement composition should be adapted in order to obtain a sweetness of about equal the sweetness of sucrose.

This results in a sugar containing composition being functionally improved with respect to sugar.

Furthermore, certain vitamins and minerals can be added to the basic formulation, consisting of a specific combination of the ingredients described above. More specific, the vitamins and minerals needed to approach the nutritional value of fruits and vegetables can be added to the formulation. In this respect, the composition of the sugar substitute can be adapted according to the fruit or vegetable that needs to be simulated. Using this approach, tasty, healthy foods can be prepared which additionally provide the essential minerals, vitamins and fibres normally absorbed through consumption of fruits and vegetables. In that way, people do not need to change their nutritional habits in order to assimilate the essential and vital elements necessary to maintain a good health. Functional foods can be prepared, replacing sucrose by the basic formulation, according to the invention, supplemented with vitamins and minerals to mimic the desired fruit or vegetable composition.

The minerals that can be added to the basic composition comprise: calcium, magnesium, potassium and phosphorus. The vitamins that can be added to the basic composition comprise: vitamin C, B, A, K and E. Further, trace elements such as selenium, iron and zinc can be added.

According to the present invention, certain health promoting bacteria can be added to the basic formulation of the sugar replacement as described above. More specifically, probiotic species of the genera *Bifidobacterium* and *Lactobacillus* can be added. In this invention the combination of polydextrose, inulin, oligofructose and resistant maltodextrin specifically results in an overall drop of the pH since it has been proven that oligofructose and oligosaccharide resistant maltodextrin are fermented in the upper part of the colon, while polysaccharide resistant maltodextrin, polydextrose and inulin are not fermented till the lower part of the colon. This overall pH drop creates a more favourable environment for Ca- and Mg-uptake, due to the improved solubility of these minerals. This effect is particularly important in preventing osteoporosis.

Such a specific formulation can be added to ice cream and frozen desserts or other cold stored food products that do not need heat processing before consumption. Due to the cold or freezing temperatures, there is low or no risk of pre-hydrolysis of the fibres prior to ingestion.

Functionally, the sugar replacement composition according to the invention can replace sugar in ice cream, particularly in scoop ice cream. Moreover, the amount of fat can be reduced in ice cream containing the sugar replacement composition according to the invention. Sugar and fat are important for the softness of ice cream and the ability to scoop frozen ice cream. The resulting low calorie ice cream has a softness that can be even higher than ice cream containing sugar.

Sugar and also salt are added to food products in order to bind water in the food products. Examples of these food products are sugar cured meat products and high sugar foods such as jams.

Sugar cured meat products are meat products, such as ham, to which sugar, salt, nitrite, nitrate and/or saltpetre are added for the purpose of flavour, colour and preservation. Sugar binds water in the food, enhances the flavour and counteracts the harshness of salt. It may also act as an energy source for bacteria, fungi, moulds and yeasts. Meat products can be injected with, soaked in or rubbed with a solution of sugar. Functionally, the sugar replacement composition according to the invention is perfectly able to replace sugar in these meat applications. The same effects on structure and flavour are obtained. In addition, replacing sugar by the sugar replacement composition in these applications has the advantage that no sugar is available for spoilage bacteria and moulds, but a selective energy source is present for the favourable microflora of the colon.

Soft meringue made with the sugar replacement composition according to the invention has the same structural stability as soft meringue made with sugar, but the brilliance is higher. Further, bacterial stability is higher and the risk of contamination with harmful and spoilage bacteria is lower.

In general, compared to sugar, the sugar replacement composition has better water retention qualities in food preparations resulting in higher shelf lives and lower bacterial contamination due to the lower availability of water. The bacterial stability of these food preparations is higher since, contrary to sugar, the fibre composition is selectively fermented by beneficial bacteria which can prevent the proliferation of harmful and spoilage bacteria. Hence, the risk of contamination with harmful and spoilage bacteria is lower.

The sugar replacement composition according to the invention can be added to raw meat products, such as raw ham and sausages, for controlling meat fermentation and enhancing food safety of the fermented meat products. The fibre composition will selectively promote the proliferation of beneficial bacteria, which in turn will prevent the proliferation of harmful and/or spoilage bacteria. Starter cultures may be added in order to ensure the presence of a sufficient amount of beneficial bacteria for the meat fermentation. These starter cultures should be able to ferment the fibre composition and to reduce the pH by the production of acids. In order to obtain a fast initial pH reduction, a fast fermentation of the fibre composition by the starter cultures is required. It should be clear that the sweetener composition, in particular the high intensity sweetener, is not required for the application in meat fermentation. However, it can be desired that a sweet taste is present after fermentation. In contrast to sugar, the high intensity sweetener will not be fermented.

The current product formulation is capable of replacing sugar on a 1/1 weight basis, thus providing food products with a functionality that goes far beyond the traditional sucrose. The sugar replacer can be obtained simply by mixing the different ingredients, which then exert synergistic effects and represent a functional and healthy replacement for sugar in every possible application.

Granulating or agglomerating the sugar replacer offers further advantages and added value to the product, such as:
- elimination of product segregation when e.g. ingredients with divergent particle size distributions are used;
- homogenous distribution of different components;
- Improvement of the flow properties;
- lowering of dust formation;
- visual appearance closer to granulated sugar.

Hence, in order to further imitate sugar, the sugar replacement composition according to the invention may be granulated. There are several ways of granulation or agglomeration, which are suitable for the sugar replacement according to the present invention.

Granulation can occur spontaneously by the addition of water to the above described sugar replacement compositions. Possibly granulation can be obtained by the addition of water containing one or more of the ingredients of the sugar replacement composition to the remaining ingredients. Polydextrose and polyols are in this respect most suitable to be dissolved in water before they are added to the remaining ingredients of the sugar replacement composition.

Agglomeration can be obtained by liquid spraying during mixing of the compounds of the sugar replacement composition. In a first stage, low or high shear mixing technologies are used to obtain a homogenous product composition. During the second stage of this process, low mixing is continued under the slow addition of a liquid. The liquid may be pure water, or water in which a part of the product composition has already been dissolved. Sugar replacer granules with particle sizes ranging from 500 µm to 2000 µm can easily be obtained using this process. Depending on the amount of liquid sprayed on the sugar replacer composition, a third stage needs to be added, which includes a drying step. This drying step can be performed in fluidized bed system.

The use of fluidized bed technology to agglomerate the sugar replacement composition is a very economic and convenient way of including the three stages, mentioned in the above method, in one step. With this system, the powder particles are fluidized in a conical shaped bed by the inlet of hot air, which mixes the ingredients of the sugar replacer formulation. During this mixing phase, a liquid, e.g. water or water with a part of the sugar replacer composition, is sprayed through a bottom or a top spray nozzle. Through this process, small particles are formed, so called "seeds", which continue to grow until the desired particle size is reached. During mixing and agglomeration, drying is obtained as well, which is controllable through both the temperature and humidity of the inlet air. An important condition for this process to succeed, is that the particle size distributions of the powder components that are fluidized, do not differ too much. This will avoid product segregation.

Press agglomeration is another method for obtaining a granulated form of the sugar replacer. A compacting system is used after mixing the components of the sugar replacer. Due to the perfectly balanced composition of the product, it can be easily agglomerated by compression of the product through e.g. roller compactors. With this method, the powder is compressed into a solid form, called "flakes". Subsequently, these flakes are gently milled to obtain the required particle size density. Optionally, the product can then be sieved followed by a recycling of the out-of-range material. Using this method, higher bulk densities can be obtained, which allows the sugar replacer to be used on both a weight/weight and a volume/volume basis.

The granulation can also be done by spray-drying. This agglomeration method is certainly a suitable process for the production of agglomerates from liquid feedstocks, i.e. solution, emulsion or suspension. For this process, a suspension or a solution of the complete sugar replacement composition is prepared, after which it is atomized into a spray of droplets and contacted with hot air.

Each of these processes are suitable for producing an agglomerated sugar replacer product according to the invention. Moreover, the composition offers the possibility of incorporating sucrose as a part of the agglomerated product, should this be desired to obtain an "improved sugar" or a partial sugar replacer. By including sugar in the agglomerated product, an improved sugar product is created, with functionalities that go far beyond those of sucrose. However, the product has been designed and is perfectly suitable to fully replace sugar, on a 1/1 weight basis. Granulation can be important for obtaining a sugar replacement composition that is also suitable for a 1/1 volume replacement of sugar.

Further examples of important functional properties of the sugar replacement composition according to the invention are:
- a minimum calorie reduction;
- a minimal caloric value;
- a low glycemic response;
- a freezing point depression.

The minimum calorie reduction obtained by substitution of sugar by the functional sugar replacer should be 60 %, when sugar is replaced for 100 %.

Preferably, the caloric value of the sugar replacement composition should not exceed 200 kcal/100 g, more specifically 150 kcal/100 g.

Substituting sugar by the formulation as described in e.g. the above third example, results in a lowering of the blood sugar levels, as opposed to glucose. The obtained glycamic response values were determined and certified by Reading Scientific Services Limited (RSSL), Reading, UK and are illustrated in figure 6. The chart clearly illustrates the different profile of sugar replacer compared to glucose. Relative to 25 g glucose, the increase in blood glucose observed following consumption of 25 g of the product was 27 % ± 8.

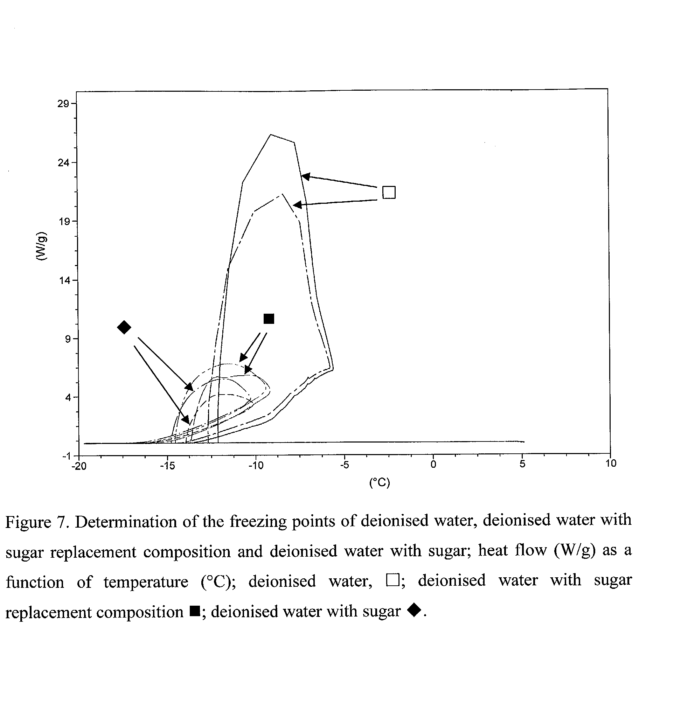

Interestingly, the sugar replacement composition has a similar freezing point depression as sucrose when it is dissolved in water. This characteristic is favourable for the use of the sugar replacement composition in frozen food products such as ice cream and sorbet. The freezing points of deionised water, deionised water with sugar replacement composition and deionised water with sugar were determined by Differential Scanning Calorimetry (DSC) in two separate experiments at a cooling rate of 1 °C/min. Figure 7 and table 17 show the results of these experiments. The freezing points are compared statistically. No significant difference can be observed by T-test between the freezing point of sugar replacement composition and sugar in deionised water.

**Table 17. Freezing point of deionised water, deionised water with sugar replacement composition and deionised water with sugar.**

| | deionised water | deionised water with sucrose | deionised water with sugar replacement composition |
|---|---|---|---|
| First experiment | -12,12 °C | -14,78 °C | -14,54 °C |
| Second experiment | -12,69 °C | -13,94 °C | -13,71 °C |
| Average | -12,41 °C | -14,36 °C | -14,13 °C |
| Standard deviation | 0,403051 | 0,59397 | 0,586899 |

| | | deionised water with sucrose | deionised water with sugar replacement composition |
|---|---|---|---|
| F-test (deviation) | deionised water | 0,759104 * | 0,766205 * |
| | deionised water with sucrose | - | 0,992376 * |
| T-test (average) | deionised water | 0,061275 ** | 0,07603 ** |
| | deionised water with sucrose | - | 0,729092 ** |

| | | | |
|---|---|---|---|
| (*) no significant difference; (**) significant difference | | | |

## Claims

1. Sugar replacement composition comprising a bulking fibre composition and a sweetener composition, whereby
• said bulking fibre composition comprises
- 30 to 75 weight %, preferably 45 to 65 weight %, of polysaccharide,
- 5 to 45 weight %, preferably 10 to 30 weight %, of oligosaccharide, and
• said sweetener composition comprises
- high intensity sweetener in an amount sufficient to provide to the sugar replacement composition a sweetness about equal to the sweetness of sugar,
the total of the sugar replacement composition being 100 weight %.

2. Sugar replacement composition according to claim 1, suitable for a 1/1 weight replacement of sugar.

3. Sugar replacement composition according to claim 1 or 2, suitable for a 1/1 volume replacement of sugar.

4. Sugar replacement composition according to one of the preceding claims, whereby at least one polysaccharide and/or oligosaccharide is prebiotic.

5. Sugar replacement composition according to one of the preceding claims, whereby at least one polysaccharide and/or oligosaccharide is composed of mainly glucose units and at least one polysaccharide and/or oligosaccharide is composed of mainly fructose units.

6. Sugar replacement composition according to one of the preceding claims, whereby said polysaccharide has a degree of polymerisation (DP) between 10 and 60, preferably between 10 and 40, and advantageously between 10 and 20.

7. Sugar replacement composition according to one of the preceding claims, whereby said polysaccharide is selected from the group consisting of inulin, polydextrose, polysaccharide resistant maltodextrin or is a combination thereof.

8. Sugar replacement composition according to one of the preceding claims, whereby said polysaccharide comprises
- 30 to 60 weight %, preferably 40 to 55 weight %, of polydextrose,
- 0 to 25 weight %, preferably 5 to 15 weight %, of inulin, and
- 0 to 20 weight %, preferably 5 to 15 weight %, of polysaccharide resistant maltodextrin,
the total of the sugar replacement composition being 100 weight %.

9. Sugar replacement composition according to one of the preceding claims, whereby said oligosaccharide has a DP between 2 and 10, preferably between 2 and 8.

10. Sugar replacement composition according to one of the preceding claims, whereby said oligosaccharide is selected from the group consisting of oligofructose, oligosaccharide resistant maltodextrin or is a combination thereof.

11. Sugar replacement composition according to one of the preceding claims, whereby said oligosaccharide comprises
- 5 to 30 weight %, preferably 5 to 10 weight %, of oligofructose, and
- 0 to 20 weight %, preferably 5 to 15 weight %, of oligosaccharide resistant maltodextrin,
the total of the sugar replacement composition being 100 weight %.

12. Sugar replacement composition according to one of the preceding claims, wherein said oligosaccharide comprises oligofructose that is obtainable by enzymatic degradation of inulin, or by transfructosylation of a β-fructosidase of *Aspergillus niger* cultivated on sucrose.

13. Sugar replacement composition according to one of the preceding claims, wherein said oligosaccharide comprises fructo-oligosaccharide that has a DP between 3 to 5.

14. Sugar replacement composition according to one of the preceding claims, whereby said bulking fibre composition comprises
- 30 to 60 weight %, preferably 40 to 55 weight %, of polydextrose,
- up to 25 weight %, preferably 5 to 15 weight %, of inulin,
- 5 to 30 weight %, preferably 5 to 10 weight %, of oligofructose,
- up to 20 weight %, preferably 10 to 15 weight %, of resistant maltodextrin,
the total of the sugar replacement composition being 100 weight %.

15. Sugar replacement composition according to one of the preceding claims, whereby the bulking fibre composition has an average degree of polymerisation of oligosaccharides between 3 and 8, preferably between 3 and 5.

16. Sugar replacement composition according to one of the preceding claims, whereby the bulking fibre composition has an average degree of polymerisation of polysaccharides between 10 and 20, preferably between 10 and 15.

17. Sugar replacement composition according to one of the preceding claims, whereby said bulking fibre composition comprises 0,01 to 10, preferably 0,05 to 3, weight % of insoluble, non selective, non digestible polysaccharide, the total of the sugar replacement composition being 100 weight %.

18. Sugar replacement composition according to one of the preceding claims, whereby said insoluble, non selective, non digestible polysaccharide is selected from the group consisting of cellulose, hemicellulose, cereal fibres, wheat fibres, oat fibres, apple fibres, orange fibres, tomato fibres or is a combination thereof, and whereby each of the selected non digestible polysaccharides is present in an amount of about 0,05 to 3 weight %, preferably 0,2 to 2 weight %, the weight of the sugar replacement composition representing 100 weight %.

19. Sugar replacement composition according to one of the preceding claims, whereby said insoluble, non selective, non digestible polysaccharide comprises about 2 weight % of wheat fibre, the total of the sugar replacement composition being 100 weight %, whereby said wheat fibre has an average length of 20 to 80 µm, preferably about 30 µm.

20. Sugar replacement composition according to one of the preceding claims, whereby said bulking fibre composition comprises 0,01 to 10, preferably 0,05 to 3, weight % of soluble, non selective, non digestible polysaccharide, the total of the sugar replacement composition being 100 weight %.

21. Sugar replacement composition according to one of the preceding claims, whereby said soluble, non selective, non digestible polysaccharide is selected from the group consisting of xanthan, tara, carrageenan, tragacanth, locust bean gum, agar, guar gum, arabic gum, carboxymethylcellulose, pectin or is a combination thereof. and whereby each of the selected non digestible polysaccharides is present in an amount of about 0,05 to 3 weight %, preferably 0,2 to 2 weight %, the weight of the sugar replacement composition representing 100 weight %.

22. Sugar replacement composition according to one of the preceding claims, whereby carrageenan is present in an amount of about 0,05 to 2, preferably 0,2 to 1 weight %, the weight of the sugar replacement composition representing 100 weight %.

23. Sugar replacement composition according to one of the preceding claims, whereby said sweetener composition comprises a low intensity sweetener.

24. Sugar replacement composition according to one of the preceding claims, whereby said sweetener composition comprises 10 to 40, preferably 10 to 30, weight % of low intensity sweetener, the total of the sugar replacement composition being 100 weight %.

25. Sugar replacement composition according to claim 24, whereby the low intensity sweetener is selected from the group consisting of maltitol, isomalt, lactitol, erythritol, polyols or a is combination thereof.

26. Sugar replacement composition according to one of the preceding claims, whereby the high intensity sweetener is selected from the group consisting of acesulfame K, neohesperidine DC, aspartame, neotame, saccharin, sucralose, or is a combination thereof.

27. Sugar replacement composition according to claim 26, whereby the high intensity sweetener comprises 0,10 to 0,20 weight % sucralose, preferably about 0,15 weight %, the weight of the sugar replacement composition representing 100 weight %.

28. Sugar replacement composition according to claim 26, whereby the high intensity sweetener comprises acesulfame K and neohesperidine DC, preferably in a ratio of acesulfame K to neohesperidine DC that is between 9,5 and 11,5, preferably between 10,0 and 11,0.

29. Sugar replacement composition according to claim 28, whereby the high intensity sweetener comprises from 0,1 to 0,3 weight % acesulfame K and from 0,01 to 0,03 weight % neohesperidine DC, the weight of the sugar replacement composition representing 100 weight %.

30. Sugar replacement composition according to claim 29, whereby the high intensity sweetener comprises about 0,15 weight % acesulfame K and about 0,015 weight % neohesperidine DC, the weight of the sugar replacement composition representing 100 weight %.

31. Sugar replacement composition according one of the claims 26 to 30, whereby the high intensity sweetener comprises glucono-δ-lacton, preferably in an amount between 0,10 and 0,20 weight %, the weight of the sugar replacement composition representing 100 weight %.

32. Sugar replacement composition according to one of the preceding claims, whereby said bulking fibre composition comprises 45 to 55 weight %, preferably about 50 weight %, of polydextrose and about 20 weight % of oligofructose, and said sweetener composition comprises about 30 weight % of maltitol, the total of the sugar replacement composition being 100 weight %.

33. Sugar replacement composition according to one of the preceding claims, whereby said sweetener composition comprises maximally about 20 weight % of isomalt, the total of the sugar replacement composition being 100 weight %.

34. Sugar replacement composition according to claims 1 to 31, whereby said bulking fibre composition comprises 45 to 55 weight %, preferably about 50 weight %, of polydextrose, about 7 weight % of inulin, about 8 weight % of oligofructose, about 12 weight % of resistant maltodextrin and said sweetener composition comprises about 20 weight % of isomalt, the total of the sugar replacement composition being 100 weight %.

35. Sugar replacement composition according to one of the preceding claims, whereby said bulking fibre comprises resistant maltodextrin of which about 50 weight % has a DP below 11, the total of resistant maltodextrin being 100 weight %.

36. Sugar replacement composition according to one of the preceding claims, further comprising SiO₂ in an amount effective to prevent caking of said sugar replacement composition.

37. Sugar replacement composition according to claim 36, wherein the SiO₂ is present in an amount of 0,1 to 0,5 weight %, preferably about 0,25 weight %, the weight of the sugar replacement composition representing 100 weight %.

38. Sugar replacement composition according to one of the preceding claims, further comprising an ingredient selected from the group consisting of calcium, magnesium, potassium, phosphorus, vitamin C, vitamin B, vitamin A, vitamin K and vitamin E, selenium, iron, zinc or a combination thereof.

39. Sugar replacement composition according to one of the preceding claims, further comprising probiotic microorganisms.

40. Sugar replacement composition according to one of the preceding claims, whereby it is granulated.

41. Sugar replacement composition according to one of the preceding claims, whereby it is granulated by the addition of water in which polyol and/or polydextrose are dissolved.

42. Sugar replacement composition according to one of the preceding claims, whereby it is granulated by liquid spraying, press agglomeration and/or spray-drying.

43. Sugar replacement composition according to one of the preceding claims, whereby it is used in a mixture with sugar, preferably in an amount up to 10 weight %, the total mixture being 100 weight %.

44. Food preparation containing or prepared with the sugar replacement composition according to one of the preceding claims.

45. Process for producing the sugar replacement composition according to any one of claims 1 to 43, comprising the step of granulating by means of liquid spraying, press agglomeration and/or spray-drying.

46. Process for producing a food preparation, comprising the use of the sugar replacement composition according to any one of claims 1 to 43.
